# EUROPÄISCHE PATENTSCHRIFT

(11) **EP 3 053 257 B1**
(45) Veröffentlichungstag und Bekanntmachung des Hinweises auf die Patenterteilung: **16.08.2017**
(21) Anmeldenummer: 14758882.6
(22) Anmeldetag: 02.09.2014
(51) Int. Cl.: H02M 3/00, H02M 1/00

(54) **GLEICHSPANNUNGSWANDLER UND VERFAHREN ZUM ANSTEUERN EINES GLEICHSPANNUNGSWANDLERS**
DC-DC CONVERTER AND METHOD FOR CONTROLLING A DC-DC CONVERTER
CONVERTISSEUR CONTINU-CONTINU ET PROCÉDÉ DE COMMANDE D'UN CONVERTISSEUR CONTINU-CONTINU

(30) Priorität: 30.09.2013 DE 102013219679
(43) Veröffentlichungstag der Anmeldung: 10.08.2016
(73) Patentinhaber: Robert Bosch GmbH, 70442 Stuttgart (DE)
(72) Erfinder: TASTEKIN, David, 70178 Stuttgart (DE); BUTZMANN, Stefan, 58579 Schalksmühle (DE)
(86) Internationale Anmeldenummer: PCT/EP2014/068615
(87) Internationale Veröffentlichungsnummer: WO 2015/043892

(56) Entgegenhaltungen:
- WO-A1-02/056450
- WO-A1-2011/132206

## Beschreibung

Die Erfindung betrifft einen Gleichspannungswandler und ein Verfahren zum Ansteuern eines Gleichspannungswandlers, insbesondere für die Spannungsversorgung eines Bordnetzes eines Hybrid- oder Elektrofahrzeugs aus einem Hochspannungsnetz.

### Stand der Technik

Die Druckschrift WO 02/056450 A1 offenbart ein Konvertersystem zum Umwandeln einer Eingangsspannung in eine Ausgleichsspannung. Hierbei sind zwei Konvertermodule, eingangs- oder ausgangsseitig in Reihe geschaltet. Auf diese Weise soll sichergestellt werden, dass die höchste Spannung, die ein Konvertermodul verarbeiten muss, nur ein Bruchteil der ein- oder ausgangsseitigen Spannung des Konvertersystems beträgt.

Bei Hybrid- oder Elektrofahrzeugen kann die Versorgung eines Niedervoltbordnetzes durch das Hochvoltnetz, welches für die Versorgung des elektrischen Antriebs des Hybridfahrzeugs eingesetzt wird, gewährleistet werden. Dazu kann beispielsweise ein Gleichspannungswandler, insbesondere ein Gegentaktdurchflusswandler mit sekundärseitigem Mittelabgriff verwendet werden, welcher Energie aus dem Hochvoltnetz entnimmt und die Hochspannung des Hochvoltnetzes in eine entsprechende Bordnetzspannung umwandelt.

Der Gleichspannungswandler muss dabei aufgrund der hohen Spannungsschwankungen im Hochvoltnetz und im Bordnetz einen weiten Eingangs- und Ausgangsspannungsbereich abdecken. Um dem entgegenzuwirken, kann dem Gleichspannungswandler hochvoltnetzseitig beispielsweise ein Hochsetzsteller vorgeschaltet werden. Alternativ kann ein mehrstufiges System mit einer Serienschaltung aus Gleichspannungswandlern verwendet werden - die Druckschriften Chen, W.; Ruan, X.; Yan, H.; Tse C. K.: "DC/DC Conversion Systems Consisting of Multiple Converter Modules: Stability, Control and Experimental Verification", IEEE Transactions on Power Electronics, Vol. 24, No. 6, Juni 2009 und Siri, K.; Willhoff, M.; Truong, C.; Conner, K. A.: "Uniform Voltage Distribution Control for Series-Input Parallel-Output, Connected Converters", IEEEAC paper '1074, v. 6, Januar 2006 offenbaren beispielsweise jeweils mehrstufige eingangsseitig seriell verschaltete und ausgangsseitig parallel verschaltete Spannungswandlerstrukturen aus mehreren Spannungswandlerstufen, bei denen die Eingangsspannung regulierbar ist.

Es besteht jedoch ein Bedarf nach Lösungen zur Gleichspannungswandlung, bei denen die verwendeten Gleichspannungswandler an einem optimalen Arbeitspunkt betrieben werden können.

### Offenbarung der Erfindung

Die vorliegende Erfindung definiert einen Gleichspannungswandler gemäß Anspruch 1 und ein Verfahren zum Ansteuern eines Gleichspannungswandlers gemäß Anspruch 9. Vorteilhafte Weiterbildungen sind in den abhängigen Ansprüchen definiert.

Die vorliegende Erfindung schafft daher gemäß einem Aspekt einen Gleichspannungswandler, mit einem ersten Eingangsspannungsanschluss und einem zweiten Eingangsspannungsanschluss, zwischen welchen eine Eingangsgleichspannung anlegbar ist, einer ersten Wandlereinrichtung, welche dazu ausgelegt ist, eine erste Teilspannung der Eingangsgleichspannung in eine Ausgangsgleichspannung zu wandeln, und einer zweiten Wandlereinrichtung, welche eingangsseitig in Serienschaltung zu der ersten Wandlereinrichtung zwischen den ersten Eingangsspannungsanschluss und den zweiten Eingangsspannungsanschluss gekoppelt ist, und welche dazu ausgelegt ist, eine zweite Teilspannung der Eingangsgleichspannung in eine Ausgangsgleichspannung zu wandeln. Der Gleichspannungswandler umfasst weiterhin eine Steuereinrichtung, welche mit der ersten Wandlereinrichtung und der zweiten Wandlereinrichtung gekoppelt ist, und welche dazu ausgelegt ist, die erste Wandlereinrichtung mit einer variablen ersten Teilspannung zu betreiben und die zweite Wandlereinrichtung mit einer konstanten zweiten Teilspannung zu betreiben.

Gemäß einem weiteren Aspekt schafft die vorliegende Erfindung ein elektrisch betreibbares Fahrzeug, mit einem Hochvoltnetz, einem Bordnetz, und einem erfindungsgemäßen Gleichspannungswandler, welcher das Hochvoltnetz mit dem Bordnetz koppelt, und welcher dazu ausgelegt ist, eine Hochvoltgleichspannung des Hochvoltnetzes in eine Bordnetzgleichspannung für das Bordnetz zu wandeln.

Gemäß einem weiteren Aspekt schafft die vorliegende Erfindung ein Verfahren zum Ansteuern eines Gleichspannungswandlers, mit den Schritten des Wandelns einer ersten Teilspannung einer Eingangsgleichspannung in eine Ausgangsgleichspannung mit einer ersten Wandlereinrichtung, des Wandelns einer zweiten Teilspannung der Eingangsgleichspannung in eine Ausgangsgleichspannung mit einer zweiten Wandlereinrichtung, des Betreibens der ersten Wandlereinrichtung mit einer variablen ersten Teilspannung, und des Betreibens der zweiten Wandlereinrichtung mit einer konstanten zweiten Teilspannung.

### Vorteile der Erfindung

Eine Idee der vorliegenden Erfindung ist es, einen Gleichspannungswandler mit Spannungswandlerstufen in zwei eingangsseitig seriell verschalteten Wandlergruppen vorzusehen. Eine der beiden Wandlergruppen kann jeweils mit einer konstanten Eingangsspannung betrieben werden, die die minimale Eingangsspannung aufnehmen können. Die andere der beiden Wandlergruppen kann dann mit variabler Eingangsspannung betrieben werden, um die Spreizung des Eingangsspannungsbereichs abdecken zu können. Die Spannungswandlerstufen, die mit konstanter Eingangsspannung betrieben werden, können vorteilhafterweise auf einen konstanten Arbeitspunkt hin optimiert werden, was deren Wirkungsgrad erheblich verbessert.

Ein wesentlicher Vorteil dieser Vorgehensweise ist es, dass nicht alle der Spannungswandlerstufen des Gleichspannungswandlers auf denselben (hohen) Eingangsspannungsbereich ausgelegt werden müssen. Stattdessen können für einen Teil der Spannungswandlerstufen wirkungsgradeffiziente Wandlertypen wie Resonanzwandler eingesetzt werden, die bei konstanten Arbeitspunkten eingesetzt werden.

Gemäß einer Ausführungsform des Gleichspannungswandlers kann die erste Wandlereinrichtung mehrere Gleichspannungswandlermodule aufweisen, welche eingangsseitig in Serienschaltung und ausgangsseitig in Parallelschaltung gekoppelt sind, und welche jeweils mit einer Modulteilspannung der ersten Teilspannung als Eingangsspannung betreibbar sind.

Gemäß einer weiteren Ausführungsform des Gleichspannungswandlers kann die zweite Wandlereinrichtung mehrere Gleichspannungswandlermodule aufweisen, welche eingangsseitig in Serienschaltung und ausgangsseitig in Parallelschaltung gekoppelt sind, und welche jeweils mit einer konstanten Modulteilspannung der zweiten Teilspannung als Eingangsspannung betreibbar sind.

In beiden Fällen kann die Anzahl der jeweils verwendeten Gleichspannungswandlermodule so geeignet gewählt werden, dass eingangsseitig Leistungshalbleiterschalter mit geringerer Sperrspannung verwendet werden können. Gegenüber Leistungshalbleiterschaltern mit höherer Sperrspannung wie beispielsweise Superjunction-MOSFETs verursachen derartige Schaltelemente wesentlich geringere Implementierungskosten.

Darüber hinaus sind sowohl die Eingangsspannungsspreizung als auch die Leistungsfähigkeit derartig aufgebauter Gleichspannungswandler durch den modularen Aufbau in vorteilhafter Weise skalierbar.

Gemäß einer weiteren Ausführungsform des Gleichspannungswandlers können die ersten und/oder zweiten Gleichspannungswandlermodule jeweils Resonanzwandler aufweisen. Dieser Wandlertyp ist besonders vorteilhaft bei der Erreichung hoher Wirkungsgrade einsetzbar, wenn sichergestellt ist, dass der Arbeitspunkt nicht oder nicht wesentlich variiert werden muss.

Gemäß einer weiteren Ausführungsform des Gleichspannungswandlers können die erste Wandlereinrichtung und die zweite Wandlereinrichtung ausgangsseitig parallel geschaltet sein.

Gemäß einer alternativen Ausführungsform des Gleichspannungswandlers können die erste Wandlereinrichtung und die zweite Wandlereinrichtung ausgangsseitig in Serie geschaltet sein. Dabei kann die Steuereinrichtung in einer weiteren Ausführungsform dazu ausgelegt ist, die erste Wandlereinrichtung mit einer variablen ersten Ausgangsspannung zu betreiben und die zweite Wandlereinrichtung mit einer konstanten zweiten Ausgangsspannung zu betreiben.

Dies ist besonders vorteilhaft, da die zweite Wandlereinrichtung nicht nur mit konstanter Eingangsspannung, sondern auch mit konstanter Ausgangsspannung betrieben werden kann. Dadurch wird die Auslegung der zweiten Wandlereinrichtung hinsichtlich Wirkungsgrad und Leistungseffizienz weiter verbessert.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines Gleichspannungswandlers gemäß einer Ausführungsform der Erfindung;
- Fig. 2: eine schematische Darstellung eines Gleichspannungswandlers gemäß einer weiteren Ausführungsform der Erfindung; und
- Fig. 3: eine schematische Darstellung eines Verfahrens zum Ansteuern eines Gleichspannungswandlers gemäß einer weiteren Ausführungsform der Erfindung.

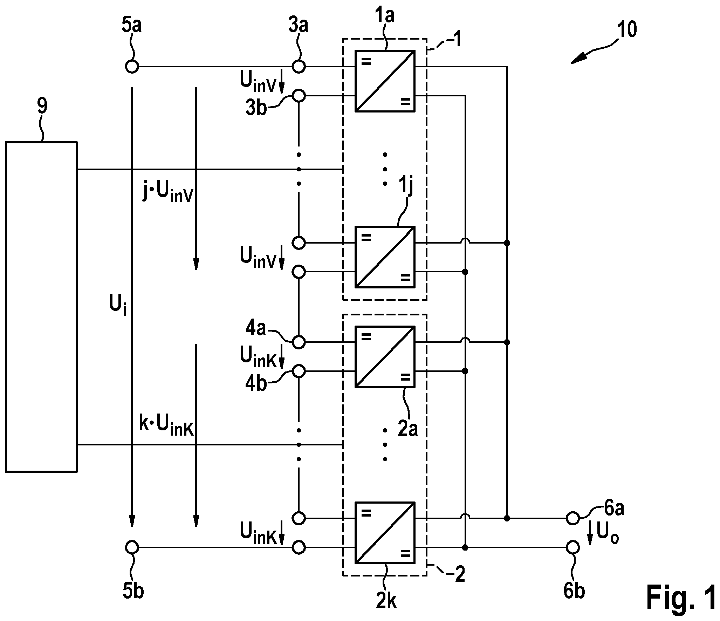

Fig. 1 zeigt eine schematische Darstellung eines Gleichspannungswandlers 10, welcher beispielsweise in einem elektrischen Antriebssystems, beispielsweise eines Hybrid- oder Elektrofahrzeugs eingesetzt werden kann. Das elektrische Antriebssystem kann in einem Hochvoltnetz eine Hochspannungsquelle umfassen, beispielsweise eine Traktionsbatterie oder eine andere Energiespeichereinrichtung eines Hybrid- oder Elektrofahrzeugs. Die Hochspannungsquelle kann dabei einen Hochspannungszwischenkreis speisen, welcher beispielsweise einen Zwischenkreiskondensator umfassen kann. Dieser Hochspannungszwischenkreis kann dabei mit den Eingangsanschlüssen 5a und 5b des Gleichspannungswandlers 10 gekoppelt werden und eine Hochvoltgleichspannung als Eingangsspannung Uᵢ für den Gleichspannungswandler 10 bereitstellen. Der Gleichspannungswandler 10 kann diese Eingangsspannung Uᵢ dann in eine Ausgangsgleichspannung Uₒ wandeln, welche an Ausgangsanschlüssen 6a bzw. 6b des Gleichspannungswandlers 10 abgegriffen werden kann, um beispielsweise in einem Bordnetz des Hybrid- oder Elektrofahrzeugs als Bordnetzgleichspannung bereitgestellt zu werden.

Die Ausgangsgleichspannung Uₒ kann dabei beispielsweise zur Versorgung einer Niedervoltbatterie bzw. Bordnetzbatterie dienen. Weiterhin kann an das Bordnetz eine Vielzahl von Bordnetzverbrauchern angeschlossen sein, welche selektiv an die Ausgangsanschlüsse des Gleichspannungswandlers 10 zu- oder abschaltbar sein können. Bordnetzverbraucher können beispielsweise eine Klimaanlage, einen Zigarettenanzünder, einen Bordcomputer, ein Hifi-System oder ähnliche elektrische Komponenten eines Fahrzeugs umfassen.

Beispielhafte und typische Wertebereiche für die Eingangsspannung Uᵢ umfassen etwa 200 V bis 340 V oder auch 250 V bis 500 V, für die Ausgangsgleichspannung Uₒ etwa 9 V bis 15,5 V. Diese Wertebereiche können bei einem Hybrid- oder Elektrofahrzeug starken Schwankungen unterliegen, so dass der Gleichspannungswandler 10 bzw. dessen Komponenten für den Ausgleich dieser Schwankungen ausgelegt werden sollte.

Dazu umfasst der Gleichspannungswandler 10 der Fig. 1 eine SIPO-Topologie, das heißt zwei Wandlereinrichtungen 1 bzw. 2 sind eingangsseitig über jeweilige Wandlereingangsanschlüsse 3a, 3b bzw. 4a, 4b seriell bzw. in Reihe geschaltet, während die Wandlereinrichtungen 1 bzw. 2 ausgangsseitig parallel verschaltet sind. Die Anzahl der Wandlereinrichtungen 1 und 2 ist nur beispielhaft mit zwei dargestellt, jede andere Anzahl größer als zwei kann für die Wandlereinrichtungen 1 bzw. 2 ebenso vorgesehen sein. Dabei können die zusätzlichen Wandlereinrichtungen in ähnlicher Weise wie die Wandlereinrichtungen 1 bzw. 2 aufgebaut werden und eingangsseitig in Reihe und ausgangsseitig parallel zu den Wandlereinrichtungen 1 bzw. 2 gekoppelt werden.

Der Gleichspannungswandler 10 weist eine erste Wandlereinrichtung 1 auf, welche dazu ausgelegt ist, eine erste Teilspannung j·U_{inV} der Eingangsgleichspannung Uᵢ in eine erste Ausgangsgleichspannung zu wandeln. Die Teilspannung j·U_{inV} bemisst sich dabei nach der Anzahl der in der ersten Wandlereinrichtung 1 vorgesehenen Gleichspannungswandlermodule 1a bis 1j, die beispielsweise jeweils gleich aufgebaut sein können. Die Gleichspannungswandlermodule 1a bis 1j sind eingangsseitig über jeweilige Moduleingangsanschlüsse 3a, 3b in Serienschaltung gekoppelt, so dass jedes der Gleichspannungswandlermodule 1a bis 1j eine Modulteilspannung U_{inV} als Eingangsspannung aufnehmen kann. Ausgangsseitig sind die Gleichspannungswandlermodule 1a bis 1j in Parallelschaltung gekoppelt.

Der Gleichspannungswandler 10 weist weiterhin eine zweite Wandlereinrichtung 2 auf, welche eingangsseitig in Serienschaltung zu der ersten Wandlereinrichtung 1 zwischen den ersten Eingangsspannungsanschluss 5a und den zweiten Eingangsspannungsanschluss 5b gekoppelt ist, und welche dazu ausgelegt ist, eine zweite Teilspannung k·U_{inK} der Eingangsgleichspannung Uᵢ in eine zweite Ausgangsgleichspannung zu wandeln. Im Beispiel der Fig. 1 sind die Ausgangsanschlüsse der ersten Wandlereinrichtung 1 und der zweiten Wandlereinrichtung 2 in Parallelschaltung gekoppelt, so dass die erste Ausgangsspannung der ersten Wandlereinrichtung 1 der zweiten Ausgangsspannung der zweiten Wandlereinrichtung 2 entspricht, das heißt, dass beide Wandlereinrichtungen 1 und 2 zur selben Gesamtausgangsspannung Uₒ beitragen.

Die zweite Wandlereinrichtung 2 weist in analoger Weise zu der ersten Wandlereinrichtung 1 Gleichspannungswandlermodule 2a bis 2k auf und ist dazu ausgelegt ist, eine zweite Teilspannung k·U_{inK} der Eingangsgleichspannung Uᵢ in eine Ausgangsgleichspannung zu wandeln. Die Teilspannung k·U_{inK} bemisst sich dabei nach der Anzahl der in der zweiten Wandlereinrichtung 2 vorgesehenen Gleichspannungswandlermodule 2a bis 2k, die beispielsweise jeweils gleich aufgebaut sein können. Die Gleichspannungswandlermodule 2a bis 2k sind eingangsseitig über jeweilige Moduleingangsanschlüsse 4a, 4b in Serienschaltung gekoppelt, so dass jedes der Gleichspannungswandlermodule 2a bis 2k eine Modulteilspannung U_{inK} als Eingangsspannung aufnehmen kann. Ausgangsseitig sind die Gleichspannungswandlermodule 2a bis 2k in Parallelschaltung gekoppelt.

Die Anzahl der Gleichspannungswandlermodule 1a bis 1j und die Anzahl der Gleichspannungswandlermodule 2a bis 2k kann dabei unterschiedlich sein - insbesondere ist es möglich, die Anzahl der einzelnen Gleichspannungswandlermodule bzw. deren Verhältnis zueinander derart zu dimensionieren, dass die durch die erste Wandlereinrichtung 1 aufgenommene erste Teilspannung j·U_{inV} der Eingangsspannungsspreizung, und die durch die zweite Wandlereinrichtung 2 aufgenommene zweite Teilspannung k·U_{inK} dem Minimalwert des Eingangsspannungsbereichs der Eingangsspannung Uᵢ entspricht. Dies ermöglicht es, die erste Wandlereinrichtung 1 mit einer variablen ersten Teilspannung j·U_{inV} zu betreiben und die zweite Wandlereinrichtung 2 mit einer konstanten zweiten Teilspannung k·U_{inK} zu betreiben.

Dies kann beispielsweise durch eine Steuereinrichtung 9 bewerkstelligt werden, welche mit der ersten Wandlereinrichtung 1 und der zweiten Wandlereinrichtung 2 gekoppelt ist, und für die entsprechende Ansteuerung der Gleichspannungswandlermodule 1a bis 1j bzw. 2a bis 2k der ersten und zweiten Wandlereinrichtung 1 bzw. 2 ausgelegt ist.

Vorteilhafterweise können die ersten und/oder zweiten Gleichspannungswandlermodule 1a bis 1j und 2a bis 2k jeweils Resonanzwandler aufweisen. Dieser Wandlertyp ist besonders effizient bei konstantem Arbeitspunkt zu betreiben.

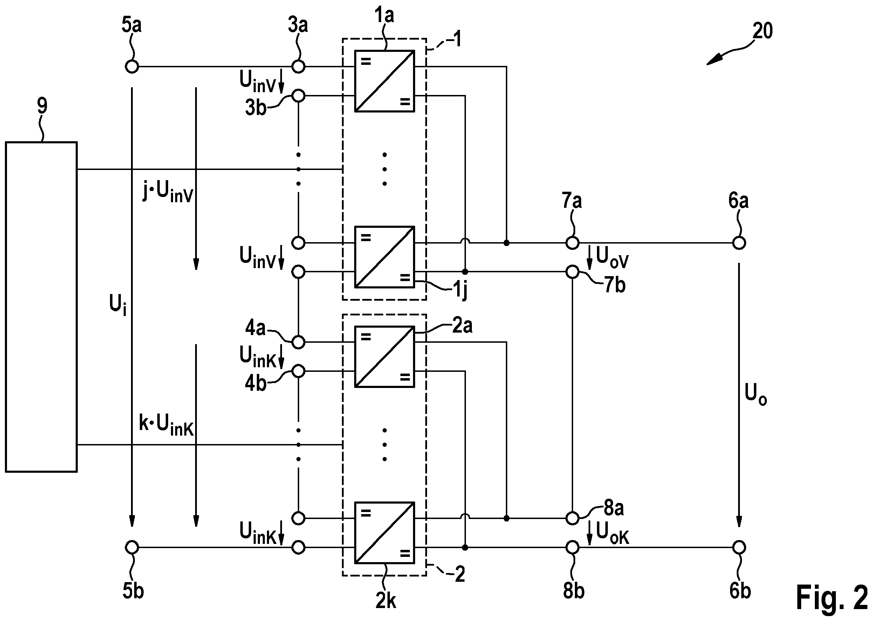

Fig. 2 zeigt eine schematische Darstellung eines weiteren Gleichspannungswandlers 20. Der Gleichspannungswandler 20 unterscheidet sich von dem Gleichspannungswandler 10 der Fig. 1 im Wesentlichen darin, dass die erste Wandlereinrichtung 1 und die zweite Wandlereinrichtung 2 ausgangsseitig nicht parallel, sondern über Teilausgangsanschlüsse 7a und 7b bzw. 8a und 8b in Serie geschaltet sind. Die erste Wandlereinrichtung 1 kann daher eine variable Ausgangsspannung U_{oV}, die zweite Wandereinrichtung 2 eine konstante Ausgangsspannung U_{oK} bereitstellen, die sich an den Ausgangsanschlüssen 6a und 6b zu der Gesamtausgangsspannung Uₒ summieren.

Die Steuereinrichtung 9 kann dabei weiterhin dazu ausgelegt sein, die erste Wandlereinrichtung 1 mit einer variablen ersten Ausgangsspannung U_{oV} zu betreiben und die zweite Wandlereinrichtung 2 mit einer konstanten zweiten Ausgangsspannung U_{oK} zu betreiben. Mit anderen Worten kann die erste Wandlereinrichtung 1 die Ausgangsspannungsspreizung auffangen, während die zweite Wandlereinrichtung 2 den Minimalwert des Ausgangsspannungsbereichs abdecken kann.

Das ermöglicht eine weitere Leistungsoptimierung der Gleichspannungswandlermodule 2a bis 2k der zweiten Wandlereinrichtung 2.

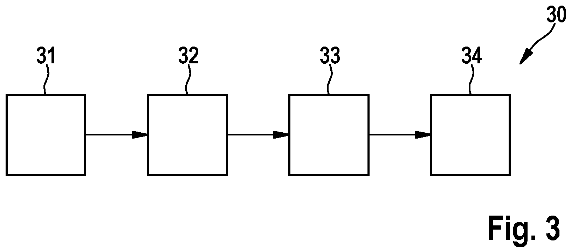

Fig. 3 zeigt eine schematische Darstellung eines Verfahrens 30 zum Ansteuern eines Gleichspannungswandlers, insbesondere eines Gleichspannungswandlers 10 oder 20 in einem elektrischen Antriebssystem eines Hybrid- oder Elektrofahrzeugs wie in Fig. 1 bzw. 2 exemplarisch gezeigt. In einem ersten Schritt 31 erfolgt ein Wandeln einer ersten Teilspannung j·U_{inV} einer Eingangsgleichspannung Uᵢ in eine Ausgangsgleichspannung mit einer ersten Wandlereinrichtung 1. In einem zweiten Schritt 32 erfolgt ein Wandeln einer zweiten Teilspannung k·U_{inK} der Eingangsgleichspannung Uᵢ in eine Ausgangsgleichspannung mit einer zweiten Wandlereinrichtung 2.

Dabei werden die erste Wandlereinrichtung 1 in einem Schritt 33 mit einer variablen ersten Teilspannung j·U_{inV}, und die zweite Wandlereinrichtung 2 in einem Schritt 34 mit einer konstanten zweiten Teilspannung k·U_{inK} betrieben.

## Patentansprüche

1. Gleichspannungswandler (10; 20), mit:
einem ersten Eingangsspannungsanschluss (5a) und einem zweiten Eingangsspannungsanschluss (5b), zwischen welchen eine Eingangsgleichspannung (Uᵢ) anlegbar ist;
einer ersten Wandlereinrichtung (1), welche dazu ausgelegt ist, eine erste Teilspannung (j·U_{inV}) der Eingangsgleichspannung (Uᵢ) in eine Ausgangsgleichspannung zu wandeln;
einer zweiten Wandlereinrichtung (2), welche eingangsseitig in Serienschaltung zu der ersten Wandlereinrichtung (1) zwischen den ersten Eingangsspannungsanschluss (5a) und den zweiten Eingangsspannungsanschluss (5b) gekoppelt ist, und welche dazu ausgelegt ist, eine zweite Teilspannung (k·U_{inK}) der Eingangsgleichspannung (Uᵢ) in eine Ausgangsgleichspannung zu wandeln; und
einer Steuereinrichtung (9), welche mit der ersten Wandlereinrichtung (1) und der zweiten Wandlereinrichtung (2) gekoppelt ist,
**dadurch gekennzeichnet, dass** die Steuereinrichtung (9) dazu ausgelegt ist, die erste Wandlereinrichtung (1) mit der ersten Teilspannung (j·U_{inV}) zu betreiben, wobei die erste Teilspannung (j·U_{inV}) variabel ist, und die zweite Wandlereinrichtung (2) mit der zweiten Teilspannung (k·U_{inK}) zu betreiben, wobei die zweite Teilspannung (k·UinK) konstant ist.

2. Gleichspannungswandler (10; 20) nach Anspruch 1, wobei die erste Wandlereinrichtung (1) mehrere Gleichspannungswandlermodule (1a; 1j) aufweist, welche eingangsseitig in Serienschaltung und ausgangsseitig in Parallelschaltung gekoppelt sind, und welche jeweils mit einer Modulteilspannung (U_{inV}) der ersten Teilspannung (j·U_{inV}) als Eingangsspannung betreibbar sind.

3. Gleichspannungswandler (10; 20) nach einem der Ansprüche 1 und 2, wobei die zweite Wandlereinrichtung (2) mehrere Gleichspannungswandlermodule (2a; 2k) aufweist, welche eingangsseitig in Serienschaltung und ausgangsseitig in Parallelschaltung gekoppelt sind, und welche jeweils mit einer konstanten Modulteilspannung (U_{inK}) der zweiten Teilspannung (k·U_{inK}) als Eingangsspannung betreibbar sind.

4. Gleichspannungswandler (10; 20) nach Anspruch 2 oder 3, wobei die Gleichspannungswandlermodule (1 a; 1j) der ersten Wandlereinrichtung (1) und/oder die Gleichspannungswandlermodule (2a; 2k) der zweiten Wandlereinrichtung (2) jeweils Resonanzwandler aufweisen.

5. Gleichspannungswandler (10) nach einem der Ansprüche 1 bis 4, wobei die erste Wandlereinrichtung (1) und die zweite Wandlereinrichtung (2) ausgangsseitig parallel geschaltet sind.

6. Gleichspannungswandler (20) nach einem der Ansprüche 1 bis 4, wobei die erste Wandlereinrichtung (1) und die zweite Wandlereinrichtung (2) ausgangsseitig in Serie geschaltet sind.

7. Gleichspannungswandler (20) nach Anspruch 6, wobei die Steuereinrichtung (9) weiterhin dazu ausgelegt ist, die erste Wandlereinrichtung (1) mit einer variablen ersten Ausgangsspannung (U_{oV}) zu betreiben und die zweite Wandlereinrichtung (2) mit einer konstanten zweiten Ausgangsspannung (U_{oK}) zu betreiben.

8. Elektrisch betreibbares Fahrzeug, mit:
einem Hochvoltnetz;
einem Bordnetz; und
einem Gleichspannungswandler (10; 20) nach einem der Ansprüche 1 bis 7, welcher das Hochvoltnetz mit dem Bordnetz koppelt, und welcher dazu ausgelegt ist, eine Hochvoltgleichspannung des Hochvoltnetzes in eine Bordnetzgleichspannung für das Bordnetz zu wandeln.

9. Verfahren (30) zum Ansteuern eines Gleichspannungswandlers (10; 20), mit den Schritten:
Wandeln (31) einer ersten Teilspannung (j·U_{inV}) einer Eingangsgleichspannung (Uᵢ) in eine Ausgangsgleichspannung mit einer ersten Wandlereinrichtung (1); und
Wandeln (32) einer zweiten Teilspannung (k·U_{inK}) der Eingangsgleichspannung (Uᵢ) in eine Ausgangsgleichspannung mit einer zweiten Wandlereinrichtung (2);
**gekennzeichnet durch** die Schritte
Betreiben (33) der ersten Wandlereinrichtung (1) mit der ersten Teilspannung (j·U_{inV}), wobei die erste Teilspannung (j·U_{inV}) variabel ist; und
Betreiben (34) der zweiten Wandlereinrichtung (2) mit der zweiten Teilspannung (k·U_{inK}), wobei die zweite Teilspannung (k·UinK) konstant ist.

## Claims

1. DC voltage converter (10; 20), having:
a first input voltage connection (5a) and a second input voltage connection (5b), between which a DC input voltage (Uᵢ) can be applied;
a first converter device (1), which is configured to convert a first partial voltage (j·U_{inV}) of the DC input voltage (Uᵢ) to a DC output voltage;
a second converter device (2), which is coupled on the input side in series with the first converter device (1) between the first input voltage connection (5a) and the second input voltage connection (5b), and which is configured to convert a second partial voltage (k·U_{inK}) of the DC input voltage (Uᵢ) to a DC output voltage; and a control device (9), which is coupled to the first converter device (1) and the second converter device (2),
**characterized in that** the control device (9) is configured to operate the first converter device (1) using the first partial voltage (j·U_{inV}), wherein the first partial voltage (j·U_{inV}) is variable, and to operate the second converter device (2) using the second partial voltage (k·U_{inK}), wherein the second partial voltage (k·U_{inK}) is constant.

2. DC voltage converter (10; 20) according to Claim 1, wherein the first converter device (1) has a plurality of DC voltage converter modules (1a; 1j), which are coupled in series on the input side and are coupled in parallel on the output side, and which can each be operated using a module partial voltage (U_{inV}) of the first partial voltage (j·U_{inV}) as input voltage.

3. DC voltage converter (10; 20) according to either of Claims 1 and 2, wherein the second converter device (2) has a plurality of DC voltage converter modules (2a; 2k), which are coupled in series on the input side and are coupled in parallel on the output side, and which can each be operated using a constant module partial voltage (U_{inK}) of the second partial voltage (k·U_{inK}) as input voltage.

4. DC voltage converter (10; 20) according to Claim 2 or 3, wherein the DC voltage converter modules (1a; 1j) of the first converter device (1) and/or the DC voltage converter modules (2a; 2k) of the second converter device (2) each have resonant converters.

5. DC voltage converter (10) according to one of Claims 1 to 4, wherein the first converter device (1) and the second converter device (2) are connected in parallel on the output side.

6. DC voltage converter (20) according to one of Claims 1 to 4, wherein the first converter device (1) and the second converter device (2) are connected in series on the output side.

7. DC voltage converter (20) according to Claim 6, wherein the control device (9) is furthermore configured to operate the first converter device (1) using a variable first output voltage (U_{oV}) and to operate the second converter device (2) using a constant second output voltage (U_{oK}).

8. Electrically operable vehicle, having:
a high-voltage power supply system;
an on-board power supply system; and
a DC voltage converter (10; 20) according to one of Claims 1 to 7, which couples the high-voltage power supply system to the on-board power supply system, and which is configured to convert a high-voltage DC voltage of the high-voltage power supply system to a DC on-board power supply system voltage for the on-board power supply system.

9. Method (30) for driving a DC voltage converter (10; 20) having the steps of:
converting (31) a first partial voltage (j·U_{inV}) of a DC input voltage (Uᵢ) to a DC output voltage using a first converter device (1); and
converting (32) a second partial voltage (k·U_{inK}) of the DC input voltage (Uᵢ) to a DC output voltage using a second converter device (2);
**characterized by** the steps of
operating (33) the first converter device (1) using the first partial voltage (j U_{inV}), wherein the first partial voltage (j·U_{inV}) is variable; and
operating (34) the second converter device (2) using the second partial voltage (k·U_{inK}), wherein the second partial voltage (k·U_{inK}) is constant.

## Revendications

1. Convertisseur de tension continue (10 ; 20), comprenant
une première borne de tension d'entrée (5a) et une deuxième borne de tension d'entrée (5b) entre lesquelles peut être appliquée une tension continue d'entrée (Uᵢ) ;
un premier dispositif convertisseur (1) qui est conçu pour convertir une première tension partielle (j.U_{inV}) de la tension continue d'entrée (Uᵢ) en une tension continue de sortie ;
un deuxième dispositif convertisseur (2) qui est branché en série du côté de l'entrée avec le premier dispositif convertisseur (1) entre la première borne de tension d'entrée (5a) et la deuxième borne de tension d'entrée (5b), et qui est conçu pour convertir une deuxième tension partielle (k. U_{inK}) de la tension continue d'entrée (Uᵢ) en une tension continue de sortie ; et
un dispositif de commande (9) qui est connecté au premier dispositif convertisseur (1) et au deuxième dispositif convertisseur (2),
**caractérisé en ce que** le dispositif de commande (9) est conçu pour faire fonctionner le premier dispositif convertisseur (1) avec la première tension partielle (j.U_{inV}), la première tension partielle (j.U_{inV}) étant variable, et le deuxième dispositif convertisseur (2) avec la deuxième tension partielle (k.U_{inV}), la deuxième tension partielle (k.U_{inV}) étant constante.

2. Convertisseur de tension continue (10 ; 20) selon la revendication 1, le premier dispositif convertisseur (1) possédant plusieurs modules convertisseurs de tension continue (1a ; 1j), lesquels sont branchés en série du côté de l'entrée et en parallèle du côté de la sortie, et lesquels peuvent respectivement fonctionner avec une tension partielle de module (U_{inV}) de la première tension partielle (j.U_{inV}) en tant que tension d'entrée.

3. Convertisseur de tension continue (10 ; 20) selon l'une des revendications 1 et 2, le deuxième dispositif convertisseur (2) possédant plusieurs modules convertisseurs de tension continue (2a ; 2k), lesquels sont branchés en série du côté de l'entrée et en parallèle du côté de la sortie, et lesquels peuvent respectivement fonctionner avec une tension partielle de module (U_{inK}) constante de la deuxième tension partielle (k.U_{inK}) en tant que tension d'entrée.

4. Convertisseur de tension continue (10 ; 20) selon la revendication 2 ou 3, les modules convertisseurs de tension continue (1a ; 1j) du premier dispositif convertisseur (1) et/ou les modules convertisseurs de tension continue (2a ; 2k) du deuxième dispositif convertisseur (2) possédant respectivement des convertisseurs à résonance.

5. Convertisseur de tension continue (10) selon l'une des revendications 1 à 4, le premier dispositif convertisseur (1) et le deuxième dispositif convertisseur (2) étant branchés en parallèle du côté de la sortie.

6. Convertisseur de tension continue (20) selon l'une des revendications 1 à 4, le premier dispositif convertisseur (1) et le deuxième dispositif convertisseur (2) étant branchés en série du côté de la sortie.

7. Convertisseur de tension continue (20) selon la revendication 6, le dispositif de commande (9) étant en plus conçu pour faire fonctionner le premier dispositif convertisseur (1) avec une première tension de sortie variable (U_{oV}) et le deuxième dispositif convertisseur (2) avec une deuxième tension de sortie constante (U_{oK}).

8. Véhicule à fonctionnement électrique, comprenant :
un réseau à haute tension ;
un réseau de bord ; et
un convertisseur de tension continue (10 ; 20) selon l'une des revendications 1 à 7, lequel connecte le réseau à haute tension avec le réseau de bord, et lequel est conçu pour convertir une haute tension continue du réseau à haute tension en une tension de réseau de bord pour le réseau de bord.

9. Procédé (30) de commande d'un convertisseur de tension continue (10 ; 20), comprenant les étapes suivantes :
conversion (31) d'une première tension partielle (j.U_{inV}) d'une tension continue d'entrée (Uᵢ) en une tension continue de sortie avec un premier dispositif convertisseur (1) ; et
conversion (32) d'une deuxième tension partielle (k.U_{inK}) de la tension continue d'entrée (Uᵢ) en une tension continue de sortie avec un deuxième dispositif convertisseur (2) ;
**caractérisé par** les étapes suivantes :
mise en fonctionnement (33) du premier dispositif convertisseur (1) avec la première tension partielle (j.U_{inV}), la première tension partielle (j.U_{inV}) étant variable ; et
mise en fonctionnement (34) du deuxième dispositif convertisseur (2) avec la deuxième tension partielle (k.U_{inK}), la deuxième tension partielle (k.U_{inK}) étant constante.
